Europäisches Patentamt

European Patent Office

Office européen des brevets

(11) Publication number: **0 400 438**
**A1**

## EUROPEAN PATENT APPLICATION

(21) Application number: 90109575.2

(51) Int. Cl.5: **A01N 25/34, A01N 57/14**

(22) Date of filing: **19.05.90**

(30) Priority: **02.06.89 US 360660**

(43) Date of publication of application:
**05.12.90 Bulletin 90/49**

(84) Designated Contracting States:
**AT BE CH DE FR GB IT LI NL**

(71) Applicant: **MOBAY CORPORATION**
**Mobay Road**
**Pittsburgh Pennsylvania 15205(US)**

(72) Inventor: **Arther, Robert G.**
**4414 Tomahawk Road**
**Prairie Village, KS 66208(US)**
Inventor: **Rose, Wayne B.**
**6340 Robinhood Lane**
**Merriam, KS 66203(US)**

(74) Representative: **Schumacher, Günter, Dr. et al**
**c/o Bayer AG Konzernverwaltung RP**
**Patentabteilung**
**D-5090 Leverkusen 1 Bayerwerk(DE)**

(54) **Insect control device for livestock containing fenthion.**

(57) Annoying insects are controlled by attaching an insect control device to the body of the animal to be treated. The insect control device is a molded article, preferably in the form of an ear tag, which has been formed from a mixture of fenthion and polyvinyl chloride. In a preferred embodiment, the fenthion is used in combination with coumaphos. The fenthion is generally used in an amount such that it represents from about 5 to about 30 wt% of the insect control device. When used in combination with coumaphos, the fenthion is generally present in an amount of from about 5 to about 30 wt% and coumaphos is generally used in an amount such that from about 5 to about 30 wt% of the device is coumaphos. A plasticizer is not required to make the insect control device of the present invention but such plasticizer may optionally be used. Other materials such as lubricants, pigments, stabilizers, etc. may also be included in minor amounts. The device may be formed by any appropriate technique but injection molding has been found to be particularly advantageous.

EP 0 400 438 A1

## INSECT CONTROL DEVICE FOR LIVESTOCK CONTAINING FENTHION

## BACKGROUND OF THE INVENTION

The present invention relates to insect control devices for livestock and to a process for protecting livestock against insects.

Livestock are frequently troubled by various types of insects such as flies and lice which transmit infection of the skin, eyes and ears as well as cause irritation leading to loss of production. Several approaches have been taken to alleviate this insect problem. One approach requires application of an insecticide spray on the animal. This approach is undesirable because it requires a substantial amount of time and labor to gather the animals to be treated and then to treat the animals. Further, application by this method is effective for only a short period of time so that frequent applications are necessary to effectively treat the livestock. A more economical and less labor intensive approach is therefore generally preferred.

One approach which is used is application of insecticide by having the animal to be treated come into contact with a device from which the selected insecticide is dispensed. Dispensers such as dust bags or oilers are placed in areas where it is anticipated that the livestock will come into contact with them. This approach does reduce the amount of labor involved in treating livestock, but it does not ensure that each animal will receive the necessary treatment at regular intervals.

Another approach employs slow release pesticide technology. In this approach, a pesticide is mixed with a resinous substance which will release the insecticide over an extended period of time. These pesticide containing resins have been used in a variety of forms ranging from collars to tags which should be attached to various body parts of the animal. The use of pesticide containing ear tags is of particular interest for treating livestock as is evident from the large number of publications and patents directed to such ear tags.

For example, U.S. Patents 4,366,777 and 4,562,794 each disclose ear tags in which a liquid insecticide dispenser is used. In U.S. 4,366,777 the insecticidal liquid which is enclosed in a fibrous or foam reservoir is wicked onto the surface of the tag to provide insecticidal activity. In U.S. 4,562,794, the dispenser or reservoir containing the insecticide is attached to an animal identification tag. Release of the insecticide is dependent upon migration or diffusion of the insecticide through a semipermeable membrane.

U.S. 4,428,327 discloses an insecticide impregnated tape which is attached to a conventional ear tag. Each of these tags has been found to be disadvantageous because the insecticide containing reservoir or tape may be detached from the tag on fences or brush. It would therefore be advantageous to have a tag in which the insecticide is directly incorporated.

Such an approach is disclosed in U.S. Patents 4,721,064, 4,195,075 and 4,265,876 as well as in Miller et al, "Release of Pyrethroids from Insecticidal Ear Tags", J. Econ. Entomol. 76:1335-1340 (1983) and Miller et al, "Release Rates From Cattle Insecticidal Ear Tags In Various Regions Of The United States", The Southwestern Entomologist, Vol. 11 No.1, pages 45-50 (March 1986). The Miller et al disclosures and U.S. 4,195,075 are, however, limited to use of liquid pyrethroid insecticides which will evaporate at ambient temperatures. Use of liquid pyrethroids may be undesirable because these compounds are sensitive to degradation by sunlight and flies have developed resistance to these insecticides.

U.S. 4,721,064 teaches that any of the well known migratory and/or vaporizable insecticides may be incorporated in the disclosed tags. No particular advantage is attributed to a specific insecticide.

U.S. 4,265,876 and U.S. 4,195,075 are limited to tags containing pyrethroid insecticides whereas fenthion is not a pyrethroid.

## SUMMARY OF THE INVENTION

It is an object of the present invention to provide an insect control device for livestock which is effective against insects such as Horn and Face flies for up to four months.

It is also an object of the present invention to provide a process for protecting livestock against insects such as Horn and Face flies for up to four months.

These and other objects which will be apparent to those skilled in the art are accomplished by combining fenthion and polyvinyl chloride and then molding this mixture to form an insect control device such as an ear tag. This device or ear tag is attached to the animal to be treated.

## DETAILED DESCRIPTION OF THE INVENTION

The insect control devices of the present invention are formed from a mixture of fenthion and polyvinyl chloride. Fenthion is a liquid organophosphorous insecticide which is effective against insects such as Horn flies, grubs and lice. In the devices of the present invention, fenthion is generally present in an amount of from 5 to 30 wt% of the total weight of the device and preferably in an amount of from about 10 to about 25 wt%, most preferably in an amount of from 15 to 20 wt%. It is, of course, possible to include other known insecticides in the mixture from which the fenthion containing insect control devices of the present invention are formed. In fact, it is preferred that fenthion be used in combination with coumaphos. Where coumaphos is also used, coumaphos is generally used in a quantity of from about 5 to about 30 wt% of the total weight of the insect control device, preferably from about 10 to about 25 wt%, most preferably from about 10 to about 15 wt%. When a combination of fenthion and coumaphos is used, those insecticides are generally used in quantities such that the ratio of fenthion to coumaphos is from about 2:1 to about 1:2 based on weight, and most preferably from about 1.5:1 to about 1:1.5. It is advisable that the total quantity of insecticide present in the insect control device not exceed 35 wt% of the device and preferred that from about 20 to about 30 wt% of the device be insecticide. The most preferred amount of total insecticide present in the devices of the present invention is from about 20 to about 25%.

Polyvinyl chloride is generally present in the devices of the present invention in an amount of from 50 to 80 wt% of the total weight of the device, preferably in an amount of from about 55 to about 80 wt%, and most preferably from 55 to 65 wt%.

A plasticizer need not be used to make the insect control devices of the present invention where more than 25% of the total weight of the device is fenthion. If a plasticizer is used, it may be any one of the known plasticizers. Specific examples of suitable plasticizers include: phthalates such as dioctyl phthalate, diethyl hexyl phthalate, diphenyl phthalate, dicyclohexyl phthalate, dimethyl phthalate and dihexyl phthalate; sebacates such as dipentyl sebacate, n-butyl benzyl sebacate and dibenzyl sebacate; adipates such as dioctyl adipate, dicapryl adipate, di-isobutyl adipate and dinonyl adipate; hydrogenated polyphenols; alkylated aromatic hydrocarbons; and polyester plasticizers such as polyesters of polyols and polycarboxylic acids having a molecular weight of at least 2000. The plasticizer is present in an amount of from 0 to 30 wt% of the total weight of the insect control device, preferably from about 5 to about 25 wt%, most preferably from 10 to 20 wt%.

Other materials such as dyes, pigments, lubricants, fillers, anti-oxidants and ultraviolet stabilizers may optionally be included in the mixture from which the insect control devices of the present invention are formed. If these materials are included, they are generally present in an amount of from 1 to 10 wt%, preferably in an amount of from 2 to 4 wt%.

The mixture containing fenthion and polyvinyl chloride and optional ingredients is a mixture which is molded, preferably by injection molding, to the desired form. The preferred form is an ear tag which may be attached directly to the ear of livestock. Techniques for molding such mixtures are known to those skilled in the art. One such molding method is disclosed in U.S. Patent 4,195,075. Techniques for attaching the molded insect control device to an animal are also well known in the art.

As used herein, the expression "livestock" is intended to include cattle, sheep, pigs, horses and other animals.

Having thus described our invention, the following examples are given as being illustrative thereof. All percentages given in these examples are percents by weight, unless otherwise indicated.

## EXAMPLES

## EXAMPLE 1

2468.0 grams of polyvinyl chloride, 424.0 grams of fenthion, 982.0 grams of dioctyl adipate (DOA), 120.0 grams of organo barium zinc and 6 grams of titanium dioxide were added in the sequence listed to a mixer where they were mixed for two hours. The resultant white powder mixture was then used to mold (by injection molding) 20 ear tags in which the concentration of fenthion was 10%.

3

EXAMPLE 2

4140.0 grams of polyvinyl chloride, 2000.0 grams of fenthion, 800.0 grams of piperonyl butoxide (PBO), 800.00 grams of dioctyl adipate (DOA), 240 grams of organo barium zinc, 12 grams of titanium dioxide and 12 grams of red lake were added in the sequence listed to a mixer where they were mixed for two hours. The resultant pink colored powder mixture was then molded (by injection molding) into approximately 500 ear tags in which the fenthion concentration was 25%.

EXAMPLE 3

1.00 kg of fenthion, 1.24 kg of coumaphos, 4.3 kg of polyvinyl chloride, 0.24 kg of organo barium zinc, 1.20 kg of dioctyl adipate (DOA), 0.12 kg of titanium dioxide, 0.006 kg blue lake and 0.006 kg yellow dye were mixed in a ribbon blender which was heated to 90° F. This mixture was then extruded at 340° F and the extrudate was injection molded to form ear tags. The coumaphos was present in these ear tags at 12.5% concentration and 15.5% fenthion was present.

EXAMPLE 4

1.0 kg fenthion, 0.424 kg cyfluthrin, 4.87 kg of polyvinyl chloride, 0.80 kg piperonyl butoxide (PBO), 0.80 kg dioctyl adipate (DOA), 0.24 kg organo barium zinc, 0.012 kg titanium dioxide and 0.012 kg orange lake were mixed in a ribbon blender heated to 170° F. This mixture was then extruded and molded in the same manner as the mixture of Example 3. Fenthion was present in these tags at 12.5% concentration and cyfluthrin was present in an amount of 5.20%.

EXAMPLE 5

Ear tags in which fenthion was present at a concentration of 20%, 20% piperonyl butoxide (PBO) and 56.75% polyvinyl chloride, 3% organo barium zinc, 0.15% titanium dioxide, 0.15% blue lake were present were produced by the same procedure as was used in Example 1. These tags were attached to the ears of cattle in herds located in South Texas (80 cattle) and in Georgia (34 cattle). The number of Horn flies on each cow before attachment of the ear tag and at regular intervals subsequent to attachment were counted and the percent reduction of Horn flies was calculated as follows:

$$\frac{\text{per cent}}{\text{efficacy}} = \frac{\bar{X}\ \text{no. flies on untreated animals} - \bar{X}\ \text{no. flies on the ear tag animals}}{\bar{X}\ \text{no. flies on untreated animals}} \times 100$$

The results of these studies are reported in the Table below.

|  | South Texas | Georgia |
|---|---|---|
| #flies pretreatment | 300 - | 150 |
| #flies (% reduction) week #1 | 44 (89.6) | 0.6 (99.8) |
| 2 | 20 (92.7) | 0.1 (97.9) |
| 3 | 10 (96.0) | - - |
| 4 | 8 (97.2) | 0.0 (100) |
| 5 | 12 (96.0) | 0.0 (100) |
| 6 | 16 (95.1) | - - |
| 7 | 10 (97.5) | 0.0 (100) |
| 8 | 7 (98.1) | - - |
| 9 | 5 (97.3) | - - |
| 10 | 7 (98.5) | 0.0 (100) |
| 11 | 18 (96.4) | - - |
| 12 | 25 (96.3) | 1.3 (99.2) |
| 13 | 75 (88.0) | 1.0 (99.6) |
| 14 | 100 (80.0) | - - |
| 15 | 35 (95.0) | 1.7 (99.6) |
| 16 | 55 (91.8) | 14.1 (96.3) |

## EXAMPLE 6

The study described in Example 5 was repeated using ear tags which contained 20% fenthion, 10% piperonyl butoxide (PBO), 10% dioctyl adipate (DOA), 56.7% polyvinyl chloride, 3% organo barium zinc, 0.15% titanium dioxide and 0.15% yellow lake. The results achieved were as follows:

|  | South Texas | Georgia |
|---|---|---|
| #flies pretreatment | 350 - | 60 |
| #flies after 1 week (% reduction) | 3 (99.3) | 0.5 (99.8) |
| 2 weeks | 5 (98.2) | - - |
| 3 | 5 (98.0) | 0.0 (100) |
| 4 | 4 (98.6) | 0.0 (100) |
| 5 | 0 (100) | - - |
| 6 | 8 (97.5) | 0.0 (100) |
| 7 | 40 (90.0) | - - |
| 8 | 3 (99.2) | - - |
| 9 | 10 (96.7) | - - |
| 10 | 12 (97.5) | 0.0 (100) |
| 11 | 5 (99.0) | - - |
| 12 | 20 (97.0) | 0.2 (99.9) |
| 13 | 100 (84.0) | - - |
| 14 | 150 (70.0) | 3.7 (97.7) |
| 15 | 35 (95.0) | - - |
| 16 | 55 (91.8) | 0.9 (99.7) |

## EXAMPLE 7

The study described in Example 5 was repeated using one herd in South Texas with 103 animals with ear tags which contained 10% fenthion, 15% coumaphos, 15% dioctyl adipate (DOA) sand 56.7% polyvinyl chloride, 3% organo barium zinc, 0.15% titanium dioxide, 0.075% blue lake and 0.075% yellow lake. The results were as follows:

| #flies pretreatment | 400 |
|---|---|
| #flies after # 1 (% reduction) | |
| 2 | 8 (97.1) |
| 3 | 8 (96.8) |
| 4 | 6 (97.9) |
| 5 | 10 (96.7) |
| 6 | 4 (98.8) |
| 7 | 7 (98.2) |
| 8 | 10 (97.3) |
| 9 | 5 (98.3) |
| 10 | 5 (98.9) |
| 11 | 7 (98.6) |
| 12 | 5 (99.3) |
| 13 | 5 (99.2) |
| 14 | 10 (98.0) |
| 15 | 45 (93.5) |
| 16 | 55 (91.8) |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An insect control device for attachment to livestock which effectively releases insect controlling agent for a period of up to four months comprising a molded article formed from a mixture of fenthion and polyvinyl chloride.

2. The device of Claim 1 in which the fenthion is present in an amount of from about 15 to about 25 wt% of the total weight of the device.

3. The device of Claim 2 which is in the form of an ear tag.

4. The device of Claim 2 in which polyvinyl chloride is present in an amount of from about 55 to about 65 wt%.

5. The device of Claim 4 in which the mixture to be molded also includes up to 20 wt% plasticizer.

6. The device of Claim 5 in which the mixture to be molded also includes up to 0.15 wt% pigment or dye.

7. The device of Claim 1 in which polyvinyl chloride is present in an amount of from about 55 to about 65 wt%.

8. The device of Claim 1 which is in the form of an ear tag.

9. The device of Claim 1 in which the mixture to be molded also includes up to 5 wt% stabilizer.

10. The device of Claim 1 in which the mixture to be molded also includes up to 0.15 wt% pigment or dye.

11. The device of Claim 1 in which coumaphos is also present in the mixture to be molded.

12. The device of Claim 1 in which from 5 to 30% fenthion and 5 to 30% coumaphos are present in the mixture to be molded.

13. A process for treating livestock to control insects comprising attaching the device of Claim 1 to the animal to be treated.

14. A process for treating livestock to control insects comprising attaching the device of Claim 6 to the ear of the animal to be treated.

15. A process for treating livestock to control insects comprising attaching the device of Claim 11 to the ear of the animal to be treated.

16. A process for treating livestock to control insects comprising attaching the device of Claim 12 to the ear of the animal to be treated.

## DOCUMENTS CONSIDERED TO BE RELEVANT

EP 90109575.2

| Category | Citation of document with indication, where appropriate, of relevant passages | Relevant to claim | CLASSIFICATION OF THE APPLICATION (Int. Cl.⁵) |
|---|---|---|---|
| X | <u>DE - A1 - 3 602 671</u><br>(YAMADE KOSAN CO., LTD.)<br>* Page 3, lines 2-14; page 4, line 16 - page 5, line 13; especially page 6, line 13 *<br>-- | 1,4,7, 9 | A 01 N 25/34<br>A 01 N 57/14 |
| P,X | <u>EP - A2 - 0 338 821</u><br>(SECTO COMP. LTD.)<br>* Abstract; claims 1,2; page 4, line 2 *<br>-- | 1,13 | |
| D,A | <u>US - A - 4 721 064</u><br>(DENK et al.)<br>* Abstract *<br>-- | 1,13-16 | |
| A | <u>CH - A5 - 622 677</u><br>(AMERICAN CYANAMID COMP.)<br>* Abstract *<br>---- | 1,4,7, 13-16 | |

TECHNICAL FIELDS
SEARCHED (Int. Cl.⁵)

A 01 N

The present search report has been drawn up for all claims

| Place of search | Date of completion of the search | Examiner |
|---|---|---|
| VIENNA | 22-08-1990 | SCHNASS |